# EUROPÄISCHE PATENTSCHRIFT

(11) **EP 3 894 803 B1**
(45) Veröffentlichungstag und Bekanntmachung des Hinweises auf die Patenterteilung: **16.08.2023**
(21) Anmeldenummer: 19808760.3
(22) Anmeldetag: 21.11.2019
(51) Int. Cl.: G01F 1/84

(54) **CORIOLIS-MESSAUFNEHMER EINES CORIOLIS-MESSGERÄTS UND EIN CORIOLIS-MESSGERÄT**
CORIOLIS MEASURING SENSOR OF A CORIOLIS MEASURING INSTRUMENT AND A CORIOLIS MEASURING INSTRUMENT
CAPTEUR À EFFET CORIOLIS D'UN APPAREIL DE MESURE À EFFET CORIOLIS ET UN APPAREIL DE MESURE À EFFET CORIOLIS

(30) Priorität: 11.12.2018 DE 102018131742
(43) Veröffentlichungstag der Anmeldung: 20.10.2021
(73) Patentinhaber: Endress + Hauser Flowtec AG, 4153 Reinach (CH)
(72) Erfinder: SCHWENTER, Benjamin, 4147 Aesch (CH); WERNER, Marc, 79639 Grenzach-Wyhlen (DE); HOLLINGER, Claude, 4147 Aesch (DE); GSCHWEND, Gebhard, 4123 Allschwil (CH)
(74) Vertreter: Waselikowski, Stefan
(86) Internationale Anmeldenummer: PCT/EP2019/082018
(87) Internationale Veröffentlichungsnummer: WO 2020/120092

(56) Entgegenhaltungen:
- DE-A1-102015 120 087
- JP-A- H1 151 733
- US-A- 4 756 198
- US-A1- 2016 187 300

## Beschreibung

Die Erfindung betrifft einen Coriolis-Messaufnehmer eines Coriolis-Messgeräts zum Erfassen eines Massedurchflusses oder einer Dichte eines durch mindestens ein Messrohr des Coriolis-Messgeräts strömenden Mediums und ein solche Coriolis-Messgerät.

Kernkomponenten eines Coriolis-Messaufnehmers sind Schwingungserreger und Schwingungssensoren, welche häufig ein Magnetsystem mit einer Spulenvorrichtung und einer Magnetvorrichtung aufweisen, welche dazu eingerichtet sind, miteinander über elektromagnetische Felder wechselwirken. Diese Wechselwirkung wird dazu ausgenutzt, im Falle eines Erregers zumindest ein Messrohr zum Schwingen anzuregen, oder im Falle eines Sensors eine Schwingung mindestens eines Messrohrs zu erfassen.

Die noch unveröffentlichte DE102018119941.4 zeigt einen Coriolis-Messaufnehmer mit einem Magnetsystem, bei welchem ein hufeisenförmiger Magnet dazu eingerichtet ist, eine Spulenvorrichtung mit einer Spule mit einem homogenen Magnetfeld zu beaufschlagen, welches Magnetfeld senkrecht zu einer Querschnittsebene der Spule ausgerichtet ist. Homogene Magnetfelder haben den Nachteil, dass Relativbewegungen zwischen Spule und Magnet nicht gut detektierbar sind.

Die US4756198A offenbart ein Zweirohr-Coriolis-Messgerät mit schleifenförmigen Messrohren.

Die DE102015120087A1 offenbart ein Feldgerät mit einem Messaufnehmer vom Vibrationstyp, wobei Vibrationserreger bzw. Vibrationssensoren jeweils eine Leiterplatte mit einer Leiterbahn aufweisen.

Aufgabe der Erfindung ist es daher einen Coriolis-Messaufnehmer sowie ein Coriolis-Messgerät vorzuschlagen, welches eine höhere Sensorempfindlichkeit aufweist.

Die Aufgabe wird gelöst durch einen Coriolis-Messaufnehmer gemäß dem unabhängigen Anspruch 1 sowie durch ein Coriolis-Messgerät gemäß dem Anspruch 15 Ein erfindungsgemäßer Coriolis-Messaufnehmer eines Coriolis-Messgeräts zum Erfassen eines Massedurchflusses oder einer Dichte eines durch mindestens ein Messrohr des Coriolis-Messgeräts strömenden Mediums, umfasst:
das mindestens eine Messrohr mit einem Einlauf und einem Auslauf, welches dazu eingerichtet ist, das Medium zwischen Einlauf und Auslauf zu führen;
mindestens einen Erreger, welcher dazu eingerichtet ist, das mindestens eine Messrohr zu Schwingungen anzuregen;
mindestens zwei Sensoren, welche dazu eingerichtet sind, die Schwingungen mindestens eines Messrohrs zu erfassen;
wobei mindestens ein Erreger sowie mindestens ein Sensor jeweils eine Spulenvorrichtung mit jeweils mindestens einer Spule, sowie jeweils eine Magnetvorrichtung aufweisen, wobei die Magnetvorrichtung und die Spulenvorrichtung relativ zueinander bewegbar sind,
wobei der Messaufnehmer ein Trägerkörper aufweist, welcher dazu eingerichtet ist, das mindestens eine Messrohr zu halten,
wobei die Magnetvorrichtung eine magnetisch leitfähige Halterung, insbesondere ferromagnetische Halterung für Magnete und zumindest ein erstes Paar Magnete aufweist, welche auf einer ersten Seite der Spulenvorrichtung an der Halterung angeordnet sind,
wobei die Magnete jeweils dazu eingerichtet sind, ein Magnetfeld senkrecht zu einer Querschnittsebene der Spule zu verursachen,
wobei das Magnetfeld eines ersten Magneten des Paars entgegengesetzt zum Magnetfeld eines zweiten Magneten des Paars orientiert ist.

Durch die lokale Kombination zweier entgegengesetzter, benachbarter Magnetfelder führen bereits kleine Relativbewegungen zu einer deutlichen Induktion einer elektrischen Spannung in der Spulenvorrichtung. In Folge dessen sind erfindungsgemäße Sensoren hochsensibel für solche Relativbewegungen.

Die magnetisch leitfähige Halterung ist dazu eingerichtet, magnetische Feldlinien der Magnete des ersten Paars zusammenzuführen.

Die Magnete sind beispielsweise aus einer Samarium-Kobalt-Legierung oder aus einer Aluminium-Nickel-Kobalt-Legierung gefertigt.

In einer Ausgestaltung weist die Halterung eine U-Form mit einem ersten Ausleger und einem zweiten Ausleger und einer die Ausleger verbindenden Basis auf,
wobei die Halterung die Spulenvorrichtung umgreift, so dass der erste Ausleger bzgl. eines Spulenquerschnitts auf einer ersten Seite der Spulenvorrichtung angeordnet ist, und wobei der zweite Ausleger auf einer zweiten Seite der Spulenvorrichtung angeordnet ist,
wobei das erste Paar Magnete auf einer Innenseite des ersten Auslegers angeordnet ist.

Insbesondere sind die Magnete des ersten Paars entlang einer Relativbewegung bzgl. der Spulenvorrichtung orientiert.

Der zweite Ausleger nimmt aufgrund seiner magnetischen Leitfähigkeit die Magnetfelder der Magnete des ersten Paars auf führt magnetische Feldlinien zusammen.

In einer Ausgestaltung ist ein zweites Paar Magnete auf einer Innenseite des zweiten Auslegers angeordnet und steht dem ersten Paar Magnete gegenüber,
wobei sich gegenüberstehende Magnete jeweils ein gleichgerichtetes Magnetfeld verursachen.

Auf diese Weise lässt sich eine Magnetfeldstärke im Bereich der Spulenvorrichtung erhöhen und eine schärfe räumliche Trennung zwischen den gegensätzlich orientierten Magnetfeldern erreichen.

In Folge dessen sind erfindungsgemäße Sensoren noch sensibler für solche Relativbewegungen.

In einer Ausgestaltung weist die mindestens eine Spule einen Zentralbereich und einen den Zentralbereich umfassenden Windungsbereich auf,
wobei in einem Ruhezustand des mindestens einen Messrohrs eine Grenze zwischen den Magneten eines Paars projiziert auf die Querschnittsebene zumindest abschnittsweise im Zentralbereich befindlich ist.

Die Spulenvorrichtung kann beispielsweise eine gesinterte Multilayerspulenvorrichtung sein, welche eine Leiterplattenvorrichtung mit mehrere Leiterplatten aufweist, wobei die Spule auf einer oder mehreren Leiterplatten zumindest abschnittsweise mittels einer elektrisch leitfähigen Leiterbahn ausgebildet ist.

In einer Ausgestaltung weisen die Magnete jeweils eine Kontaktfläche aufweisen, mittels welcher Kontaktfläche sie mit der Halterung kontaktiert sind,
wobei die Kontaktfläche mindestens eines Magnets eines jeweiligen Paars eine erste geometrische Struktur aufweist, und wobei die Halterung im Bereich der jeweiligen Kontaktfläche eine zweite geometrische Struktur aufweist, welche zumindest abschnittsweise invers zur jeweiligen ersten geometrischen Struktur ist,
wobei die erste geometrische Struktur uneben ist.

Auf diese Weise kann die Haftung der Magnete an der Halterung verbessert werden.

In einer Ausgestaltung weist die erste geometrische Struktur zumindest abschnittsweise eine konkave oder konvexe Krümmung auf,
und/oder die erste geometrische Struktur weist mindestens einen Vorsprung und/oder mindestens eine Vertiefung auf, wobei der Vorsprung und/oder die Vertiefung einen runden oder rechteckigen oder vieleckigen Querschnitt aufweist.

In einer Ausgestaltung sind die Magnete im Bereich ihrer jeweiligen Kontaktflächen zumindest abschnittsweise mit der Halterung befestigt,
wobei die Befestigung auf mindestens einer der folgenden Techniken basiert:
Löten, Sintern, Schweißen, Kleben, Punkten, Schrumpfen, Einpressen

In einer Ausgestaltung wird der Magnet geklebt, wobei der Kleber insbesondere ein Keramikkleber ist.

Beispielsweise kann ein Kleber des Unternehmens Aremco unter den Bezeichnung Ceramabond verwendet werden,
In einer Ausgestaltung ist die Spule eines Erregers dazu eingerichtet, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

In einer Ausgestaltung ist die Magnetvorrichtung mechanisch mit dem zugehörigen Messrohr verbunden, und wobei die Spulenvorrichtung bzgl. des Einlaufs bzw. Auslaufs translatorisch sowie rotatorisch fixiert ist.

In einer Ausgestaltung weist der Messaufnehmer ein Messrohr auf,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper befestigt sind,
oder wobei der Messaufnehmer ein Messrohrpaar aufweist, wobei die Halterung / die Spulenvorrichtung des Sensors bzw. Erregers jeweils an einem ersten Messrohr befestigt sind, und die Spulenvorrichtung / die Halterung jeweils an einem zweiten Messrohr befestigt sind.

In einer Ausgestaltung weist der Coriolis-Messaufnehmer zwei Messrohrpaare auf.

Ein erfindungsgemäßes Coriolis-Messgerät umfasst einen erfindungsgemäßen Coriolis-Messaufnehmer;
eine elektronische Mess-/Betriebsschaltung, wobei die elektronische Mess-/Betriebsschaltung dazu eingerichtet ist, die Spulen und gegebenenfalls zugehörige Temperaturmessvorrichtung elektrisch zu beaufschlagen, wobei die Beaufschlagung der Spule sowie der Temperaturmessvorrichtung mittels separater elektrischer Verbindungen oder mittels eines Multiplexings bewerkstelligt ist,
wobei die mindestens eine elektrische Verbindung eines Sensors bzw. Erregers mittels einer Kabelführung zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 skizziert den Aufbau eines typischen Coriolis-Messgeräts;
Fig. 2 a) zeigt eine Aufsicht auf eine Spulenvorrichtung, und Figs. 2b) und 2c) zeigen jeweils eine beispielhafte erfindungsgemäße Ausgestaltung einer Spulenvorrichtung und einer Magnetvorrichtung;
Figs. 3 a) bis d) zeigen verschiedene beispielhafte erfindungsgemäße Ausgestaltungen eines Magnets;

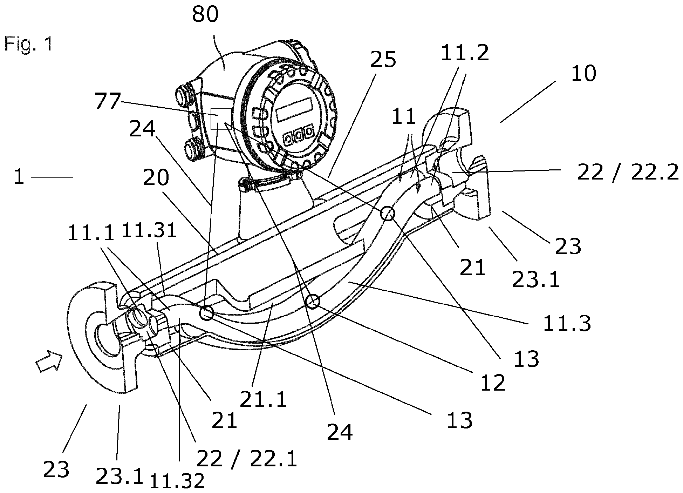

Fig. 1 skizziert den Aufbau eines Coriolis-Messgeräts 1 mit einem beispielhaften erfindungsgemäßen Coriolis-Messaufnehmer 10, wobei der Messaufnehmer zwei Messrohre 11 mit jeweils einem Einlauf 11.1 und einem Auslauf 11.2, eine Erreger 12, zwei Sensoren 13, zwei Sammler 22 und zwei Prozessanschlüsse 23 aufweist. Der Erreger ist dazu eingerichtet, die beiden Messrohre senkrecht zu einer jeweils durch die bogenförmig ausgestalteten Messrohre definierten Messrohrlängsebene zum Schwingen anzuregen. Die Sensoren sind dazu eingerichtet, die den Messrohren aufgeprägte Schwingung zu erfassen. Ein erster Sammler 22.1 auf einer stromaufwärtsgerichteten Seite des Messaufnehmers ist dazu eingerichtet, ein aus einer Rohrleitung in den Messaufnehmer einströmendes Medium aufzunehmen und zu den Einläufen der beiden Messrohre zu führen, ein zweiter Sammler 22.2 ist dazu eingerichtet, das aus den Ausläufen der beiden Messrohre austretende Medium aufzunehmen und in die Rohrleitung zu führen. Die Sammler ihrerseits münden jeweils in einen Prozessanschluss 23, welcher wie hier gezeigt Flansche 23.1 sein können. Die Prozessaufnehmer sind dazu eingerichtet, den Coriolis-Messaufnehmer bzw. das Coriolis-Messgerät mit einer Rohrleitung zu verbinden.

Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, die Erregeranordnung sowie die Sensoranordnungen zu betrieben und auf Basis von mittels der Sensoranordnungen gemessenen Schwingungseigenschaften des Messrohrs Durchflussmesswerte und/oder Dichtemesswerte zu ermitteln und bereitzustellen. Die Erregeranordnung sowie die Sensoranordnungen sind mittels elektrischer Verbindungen 24 mit der elektronischen Mess-/Betriebsschaltung verbunden. Die elektrischen Verbindungen 24 können jeweils durch Kabelführungen 25 zusammengefasst sein.

Der Coriolis-Messaufnehmer weist ferner eine Fixiervorrichtung 21 auf, welche dazu eingerichtet ist, äußere Schwingungsknoten von Messrohrschwingungen zu definieren.

Ein erfindungsgemäßes Coriolis-Messgerät ist nicht auf das Vorhandensein zweier Messrohre beschränkt. So sind auch Einrohr- oder Mehrrohrsysteme mit mehr als zwei Rohren denkbar.

Die Spulenvorrichtungen bzw. Magnetvorrichtungen sind über dafür vorgesehene Befestigungsvorrichtungen entweder an einem entsprechenden Messrohr oder beispielsweise am Trägerkörper befestigt. Der Fachmann wird eine Befestigungsvorrichtung gemäß seinen Bedürfnissen bzw. gemäß technischer Anforderungen Einrichten.

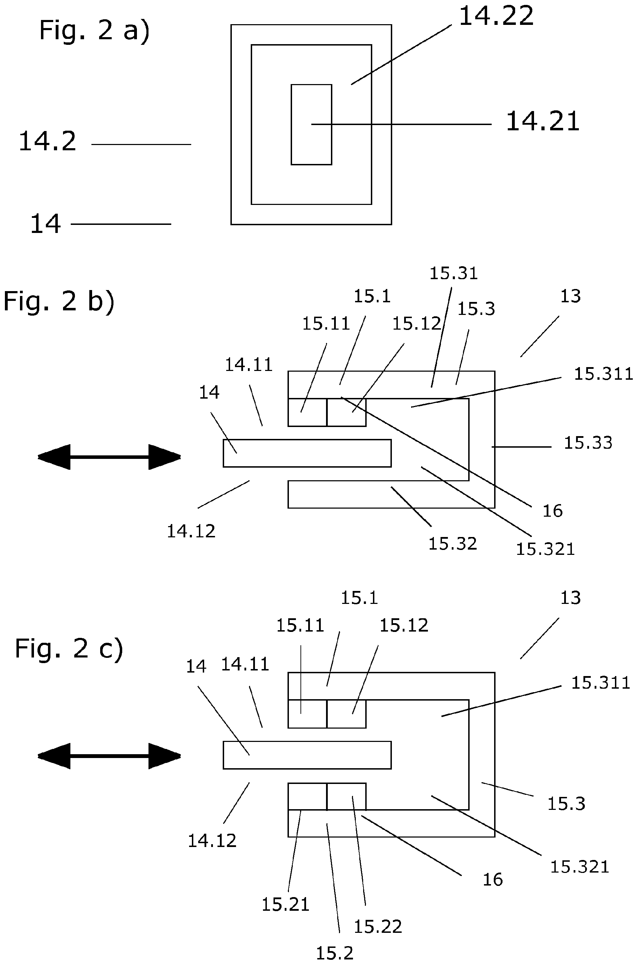

Fig. 2 a) zeigt eine Aufsicht auf eine Spulenvorrichtung 14 mit einer Spule 14.2. Die Spule weist einen Windungsbereich 14.22 und einen Zentralbereich 14.21 frei von Windungen der Spule auf. Die Spulenvorrichtung kann beispielsweise eine gesinterte Multilayerspulenvorrichtung sein, welche eine Leiterplattenvorrichtung mit mehrere Leiterplatten aufweist, wobei die Spule auf einer oder mehreren Leiterplatten zumindest abschnittsweise mittels einer elektrisch leitfähigen Leiterbahn ausgebildet ist.

Fig. 2 b) zeigt eine beispielhafte erfindungsgemäße Ausgestaltung einer Spulenvorrichtung 14 und einer Magnetvorrichtung 15. Die Spulenvorrichtung und die Magnetvorrichtung sind parallel zu einer Querschnittsebene der Spule relativ zueinander bewegbar, so dass Messrohrschwingungen zu einem zeitlich variierenden Magnetfeld im Bereich der Spulenvorrichtung führen. Die Magnetvorrichtung weist eine magnetisch leitfähige Halterung 15.3 sowie zumindest ein erstes Paar Magnete 15.1 mit einem ersten Magnet 15.11 und einem zweiten Magnet 15.12 auf, welche auf einer ersten Seite 14.11 der Spulenvorrichtung an der Halterung befestigt sind. Der erste Magnet und der zweite Magnet sind räumlich nahe beieinanderliegend oder sich berührend an der Halterung befestigt dergestalt, dass die von ihnen verursachten Magnetfelder gegensätzlich und jeweils senkrecht zur Querschnittsebene der Spule orientiert sind. Der erste Magnet und der zweite Magnet sind dabei entlang der Bewegungsrichtung hintereinander angeordnet. Die magnetisch leitfähige, insbesondere ferromagnetische Halterung 15.3 ist dazu eingerichtet, magnetische Feldlinien zusammenzuführen, und weist kein wesentliches inhärentes Magnetfeld auf. Die Gegensätzlichkeit der Magnetfelder der beiden Magnete sorgt in einem Grenzbereich der Magnete für ein räumlich stark inhomogenes Gesamtmagnetfeld, wobei die Inhomogenität senkrecht zur Querschnittsebene der Spule verläuft. Durch die lokale Kombination zweier entgegengesetzter, benachbarter Magnetfelder führen bereits kleine Relativbewegungen zwischen Spulenvorrichtung und Magnetvorrichtung zu einer deutlichen Induktion einer elektrischen Spannung in der Spulenvorrichtung. In Folge dessen sind erfindungsgemäße Sensoren hochsensibel für solche Relativbewegungen.

Bevorzugt befindet sich einem Ruhezustand des mindestens einen Messrohrs eine Grenze zwischen den Magneten eines Paars projiziert auf eine Querschnittsebene der Spule zumindest abschnittsweise im Zentralbereich befindlich. Auf diese Weise wird eine Auswirkung einer Relativbewegung auf die Spule bzgl. der Induktion einer elektrischen Spannung verstärkt. Es ist weiterhin vorteilhaft, wenn eine räumliche Ausdehnung des ersten Paars Magnete entlang der Bewegungsrichtung der Relativbewegung größer ist als der Zentralbereich der Spule.

Die Halterung kann wie hier gezeigt, eine U-Form aufweisen mit einem ersten Ausleger 15.31 und einem zweiten Ausleger 15.32 und einem die Ausleger verbindenden Basis 15.33, wobei die Halterung die Spulenvorrichtung umgreift, so dass der erste Ausleger bzgl. eines Spulenquerschnitts auf einer ersten Seite der Spulenvorrichtung 14.11 angeordnet ist Fig. 2 c) zeigt eine weitere beispielhafte erfindungsgemäße Ausgestaltung einer Spulenvorrichtung 14 und einer Magnetvorrichtung 15, wobei die Halterung 15.3 eine U-Form aufweist mit einem ersten Ausleger 15.31 und einem zweiten Ausleger 15.32 und einem die Ausleger verbindenden Basis 15.33, wobei die Magnetvorrichtung anders als in Fig. 2 b) gezeigt nun zwei Paare Magnete aufweist, wobei jeweils ein Paar an einer Innenseite eines Auslegers befestigt ist, und wobei sich gegenüberstehende Magnete der beiden Paare jeweils ein gleichgerichtetes Magnetfeld verursachen. Auf diese Weise lässt sich eine Magnetfeldstärke im Bereich der Spulenvorrichtung erhöhen und eine schärfe räumliche Trennung zwischen den gegensätzlich orientierten Magnetfeldern erreichen. In Folge dessen sind erfindungsgemäße Sensoren hochsensibel für Relativbewegungen.

Die in Figs. 2 b) und 2 c) gezeigten Magnete sind über Kontaktflächen 16 an der Halterung befestigt, wobei die Befestigung auf mindestens einer der folgenden Techniken basiert: Löten, Sintern, Schweißen, Kleben, Punkten, Schrumpfen, Einpressen. In einer Ausgestaltung wird der Magnet geklebt, wobei der Kleber insbesondere ein Keramikkleber ist. Beispielsweise kann ein Kleber des Unternehmens Aremco unter den Bezeichnung Ceramabond 865 verwendet werden.

Die Halterung weist dabei eine konvexe Einhüllende auf, welche eine typische Abmessung von 8 Millimeter Länge, 9 Millimeter Breite, und 5 Millimeter Höhe, wobei tatsächliche Abmessungen jeweils um bis zu 30% von den genannten Abmessungen abweichen können, wobei tatsächliche Seitenverhältnisse entsprechend von den aus den genannten Abmessungen hervorgehenden Seitenverhältnissen abweichen können.

Ein geeignetes Material für die Halterung kann beispielsweise ein nichtrostender ferritischer Edelstahl, insbesondere mit der Werkstoffnummer 1.4105 sein.

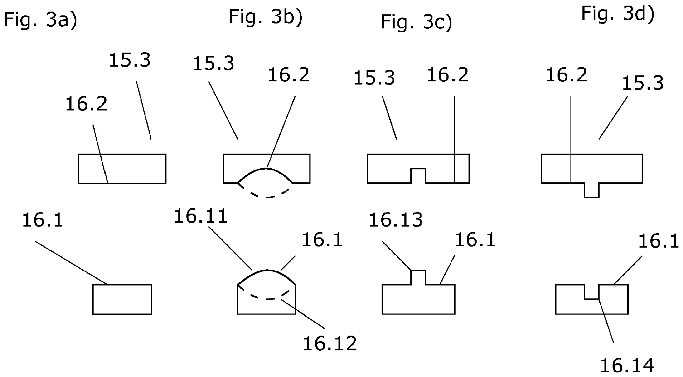

Fig. 3 a) bis d) zeigen einige beispielhafte geometrische Ausgestaltungen von Magneten zugehörige entsprechende Abschnitte der Halterung 15.3 in einer Seitenansicht, wobei die Magnete eine erste geometrische Struktur 16.1 aufweisen, und wobei die Halterung im Bereich der jeweiligen Kontaktfläche eine zweite geometrische Struktur 16.2 aufweist, welche zumindest abschnittsweise invers zur jeweiligen ersten geometrischen Struktur ist.

Die Magnete sind beispielsweise aus einer Samarium-Kobalt-Legierung oder aus einer Aluminium-Nickel-Kobalt-Legierung gefertigt.

Fig. 3 a) zeigt eine einfache und kostengünstig herstellbare Ausgestaltung eines Magnets, wobei der Magnet quaderförmig mit ebenen Seitenflächen ist. Typische Abmessungen eines solchen Magnets sind im Bereich von 5 Millimeter Länge, 3.5 Millimeter Breite, und 2 Millimeter Höhe, wobei tatsächliche Abmessungen jeweils um bis zu 30% von den genannten Abmessungen abweichen können, wobei tatsächliche Seitenverhältnisse entsprechend von den aus den genannten Abmessungen hervorgehenden Seitenverhältnissen abweichen können.

Fig. 3 b) zeigt einen Magnet mit einer konvexen ersten geometrischen Struktur 16.11, wobei die erste geometrische Struktur stattdessen auch konkav 16.12 sein kann, siehe gestrichelte Linie.

Fig. 3 c) zeigt einen Magnet mit einer ersten geometrischen Struktur, welche einen Vorsprung 16.13 aufweist.

Fig. 3 d) zeigt einen Magnet mit einer ersten geometrischen Struktur, welche eine Vertiefung 16.14 aufweist.

Die Halterung weist jeweils eine zweite geometrische Struktur 16.2 auf, welche zumindest abschnittsweise invers zur ersten geometrischen Struktur ist.

Eine erste geometrische Struktur bzw. zweite geometrische Struktur kann auch andere als die gezeigten Formen aufweisen, wie beispielsweis eine dreiecksform.

Auf diese Weise können die Magnete sauber positioniert werden. Jedoch ist die Fertigung der Magnete sowie der Halterungen technisch aufwändiger.

### Bezugszeichenliste

- 1: Coriolis-Messgerät
- 10: Coriolis-Messaufnehmer
- 11: Messrohr
- 11.1: Einlauf
- 11.2: Auslauf
- 11.31: erstes Messrohr
- 11.32: zweites Messrohr
- 12: Erreger
- 13: Sensor
- 14: Spulenvorrichtung
- 14.11: erste Seite der Spulenvorrichtung
- 14.12: zweite Seite der Spulenvorrichtung
- 14.2: Spule
- 14.21: Zentralbereich
- 14.22: Windungsbereich
- 15: Magnetvorrichtung
- 15.1: erstes Paar Magnete
- 15.11: erster Magnet des ersten Paars
- 15.12: zweiter Magnet des ersten Paars
- 15.2: zweites Paar Magnete
- 15.3: magnetisch leitfähige Halterung
- 15.31: erster Ausleger
- 15.311: Innenseite des ersten Auslegers
- 15.32: zweiter Ausleger
- 15.321: Innenseite des zweiten Auslegers
- 15.33: verbindende Basis
- 16: Kontaktfläche
- 16.1: erste geometrische Struktur
- 16.11: konkave Krümmung
- 16.12: konvexe Krümmung
- 16.13: Vorsprung
- 16.14: Vertiefung
- 16.2: zweite geometrische Struktur
- 20: Trägerkörper
- 21: Fixiervorrichtung
- 22: Sammler
- 22.1: erster Sammler
- 22.2: zweiter Sammler
- 23: Prozessanschluss
- 23.1: Flansch
- 24: elektrische Verbindungen
- 25: Kabelführungen

## Patentansprüche

1. Coriolis-Messaufnehmer (10) eines Coriolis-Messgeräts (1) zum Erfassen eines Massedurchflusses oder einer Dichte eines durch mindestens ein Messrohr des Coriolis-Messgeräts strömenden Mediums, umfassend:
das mindestens eine Messrohr (11) mit einem Einlauf (11.1) und einem Auslauf (11.2), welches dazu eingerichtet ist, das Medium zwischen Einlauf und Auslauf zu führen;
mindestens einen Erreger (12), welcher dazu eingerichtet ist, das mindestens eine Messrohr zu Schwingungen anzuregen;
mindestens zwei Sensoren (13), welche dazu eingerichtet sind, Schwingungen jeweils mindestens eines Messrohrs zu erfassen;
wobei mindestens ein Erreger und/oder mindestens ein Sensor jeweils eine Spulenvorrichtung (14) mit jeweils mindestens einer Spule (14.2), sowie jeweils eine Magnetvorrichtung (15) aufweisen, wobei die Magnetvorrichtung und die Spulenvorrichtung parallel zu einer Querschnittsebene der Spule relativ zueinander bewegbar sind,
wobei der Messaufnehmer einen Trägerkörper (20) aufweist, welcher dazu eingerichtet ist, das mindestens eine Messrohr zu halten,
wobei die Magnetvorrichtung (15) eine magnetisch leitfähige, ferromagnetische Halterung (15.3) für Magnete und zumindest ein erstes Paar Magnete (15.1) aufweist,
wobei die Magnete jeweils dazu eingerichtet sind, ein Magnetfeld senkrecht zur Querschnittsebene der Spule zu verursachen,
**dadurch gekennzeichnet, dass**
die Magnete auf einer ersten Seite der Spulenvorrichtung (14.11) entlang der Bewegungsrichtung hintereinander an der Halterung angeordnet sind,
wobei das Magnetfeld eines ersten Magneten (15.11) des ersten Paars entgegengesetzt zum Magnetfeld eines zweiten Magneten (15.12) des Paars orientiert ist.

2. Coriolis-Messaufnehmer nach Anspruch 1,
wobei die Halterung (15.3) eine U-Form mit einem ersten Ausleger (15.31) und einem zweiten Ausleger (15.32) und einer die Ausleger verbindenden Basis (15.33) aufweist,
wobei die Halterung die Spulenvorrichtung umgreift, so dass der erste Ausleger bzgl. eines Spulenquerschnitts auf einer ersten Seite der Spulenvorrichtung (14.11) angeordnet ist, und wobei der zweite Ausleger auf einer zweiten Seite der Spulenvorrichtung (14.12) angeordnet ist,
wobei das erste Paar Magnete auf einer Innenseite des ersten Auslegers (15.311) angeordnet ist.

3. Coriolis-Messaufnehmer nach Anspruch 2,
wobei ein zweites Paar Magnete (15.2) auf einer Innenseite des zweiten Auslegers (15.321) angeordnet ist und dem ersten Paar Magnete gegenübersteht,
wobei sich gegenüberstehende Magnete jeweils ein gleichgerichtetes Magnetfeld verursachen.

4. Coriolis-Messaufnehmer nach einem der vorigen Ansprüche,
wobei die mindestens eine Spule einen Zentralbereich (14.21) und einen den Zentralbereich umfassenden Windungsbereich (14.22) aufweist,
wobei in einem Ruhezustand des mindestens einen Messrohrs eine Grenze zwischen den Magneten eines Paars projiziert auf die Querschnittsebene zumindest abschnittsweise im Zentralbereich befindlich ist.

5. Coriolis-Messaufnehmer nach einem der vorigen Ansprüche,
wobei die Magnete jeweils eine Kontaktfläche (16) aufweisen, mittels welcher Kontaktfläche sie mit der Halterung kontaktiert sind,
wobei die Kontaktfläche mindestens eines Magnets eines jeweiligen Paars eine erste geometrische Struktur (16.1) aufweist, und wobei die Halterung im Bereich der jeweiligen Kontaktfläche eine zweite geometrische Struktur (16.2) aufweist, welche zumindest abschnittsweise invers zur jeweiligen ersten geometrischen Struktur ist,
wobei die erste geometrische Struktur insbesondere uneben ist.

6. Coriolis-Messaufnehmer nach Anspruch 5,
wobei die erste geometrische Struktur zumindest abschnittsweise eine konkave (16.11) oder konvexe Krümmung (16.12) aufweist,
und/oder wobei die erste geometrische Struktur mindestens einen Vorsprung (16.13) und/oder mindestens eine Vertiefung (16.14) aufweist, wobei der Vorsprung und/oder die Vertiefung einen runden oder rechteckigen oder vieleckigen Querschnitt aufweist.

7. Coriolis-Messaufnehmer nach einem der vorigen Ansprüche,
wobei die Magnete im Bereich ihrer jeweiligen Kontaktflächen (16) zumindest abschnittsweise mit der Halterung befestigt sind,
wobei die Befestigung auf mindestens einer der folgenden Techniken basiert: Löten, Sintern, Schweißen, Kleben, Punkten, Schrumpfen, Einpressen.

8. Coriolis-Messaufnehmer nach Anspruch 7,
wobei der Magnet geklebt wird und der Kleber insbesondere ein Keramikkleber ist.

9. Coriolis-Messaufnehmer nach einem der vorigen Ansprüche,
wobei die Spule eines Erregers dazu eingerichtet ist, die zugehörige Magnetvorrichtung mit einer Kraft zu beaufschlagen, und wobei die Magnetvorrichtung eines Sensors dazu eingerichtet ist, in der Spule der zugehörigen Spulenvorrichtung eine elektrische Spannung zu induzieren.

10. Coriolis-Messaufnehmer nach einem der vorigen Ansprüche,
wobei der Messaufnehmer zwei Sammler (22) aufweist, wobei ein erster Sammler (22.1) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (22.2) dazu eingerichtet ist, das aus dem Auslauf des mindestens einen Messrohrs austretende Medium aufzunehmen und in die Rohrleitung zu führen.

11. Coriolis-Messaufnehmer nach einem der vorigen Ansprüche,
wobei der Messaufnehmer zwei Prozessanschlüsse (23), insbesondere Flansche (23.1) aufweist, welche dazu eingerichtet sind, den Messaufnehmer mit einer Rohrleitung zu verbinden.

12. Coriolis-Messaufnehmer nach einem der vorigen Ansprüche,
wobei die Magnetvorrichtung mechanisch mit dem zugehörigen Messrohr (11) verbunden ist, und wobei die Spulenvorrichtung bzgl. des Einlaufs bzw. Auslaufs translatorisch sowie rotatorisch fixiert ist.

13. Coriolis-Messaufnehmer nach einem der vorigen Ansprüche,
wobei der Messaufnehmer (10) ein Messrohr (11) aufweist,
wobei die Halterung / die Spulenvorrichtung des Sensors bzw. Erregers jeweils am Messrohr befestigt ist,
und wobei die Spulenvorrichtung / die Halterung des Sensors bzw. Erregers jeweils am Trägerkörper befestigt sind,
oder wobei der Messaufnehmer (10) ein Messrohrpaar aufweist, wobei die Halterung / die Spulenvorrichtung des Sensors bzw. Erregers jeweils an einem ersten Messrohr (11.31) des Messrohrpaars befestigt sind, und die Spulenvorrichtung / die Halterung jeweils an einem zweiten Messrohr (11.32) des Messrohrpaars befestigt sind.

14. Coriolis-Messaufnehmer nach Anspruch 13,
wobei der Messaufnehmer zwei Messrohrpaare aufweist.

15. Coriolis-Messgerät (1) umfassend:
Einen Coriolis-Messaufnehmer (10) nach einem der vorigen Ansprüche;
eine elektronische Mess-/Betriebsschaltung (77), wobei die elektronische Mess-/Betriebsschaltung dazu eingerichtet ist, die Spulen und gegebenenfalls zugehörige Temperaturmessvorrichtung elektrisch zu beaufschlagen, wobei die Beaufschlagung der Spule sowie der Temperaturmessvorrichtung mittels separater elektrischer Verbindungen (24) oder mittels eines Multiplexings bewerkstelligt ist,
wobei die mindestens eine elektrische Verbindung (24) eines Sensors bzw. Erregers mittels einer Kabelführung (25) zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (80) zum Behausen der elektronischen Mess-/Betriebsschaltung aufweist.

## Claims

1. A Coriolis measuring sensor (10) of a Coriolis measuring instrument (1) for detecting a mass flow rate or a density of a medium flowing through at least one measurement tube of the Coriolis measuring instrument, comprising:
the at least one measurement tube (11) having an inlet (11.1) and an outlet (11.2), which tube is designed to convey the medium between the inlet and the outlet;
at least one exciter (12) which is designed to excite the at least one measurement tube to vibrate;
at least two sensors (13) which are designed to detect vibrations of at least one respective measurement tube;
wherein at least one exciter and/or at least one sensor respectively has a coil device (14) with respectively at least one coil (14.2) and a respective magnet device (15), wherein the magnet device and the coil device are movable relative to one another, parallel to a cross-sectional plane of the coil,
wherein the measuring sensor has a supporting element (20) which is designed to hold the at least one measurement tube,
wherein the magnet device (15) has a magnetically conductive ferromagnetic holder (15.3) for magnets, and at least one first pair of magnets (15.1),
wherein the magnets are respectively designed to cause a magnetic field perpendicular to the cross-sectional plane of the coil,
wherein
the magnets are arranged sequentially on the holder along the direction of movement on a first side of the coil device (14.11),
wherein the magnetic field of a first magnet (15.11) of the first pair is oriented opposite to the magnetic field of a second magnet (15.12) of the pair.

2. The Coriolis measurement sensor as claimed in claim 1,
wherein the holder (15.3) has a U-shape with a first arm (15.31) and a second arm (15.32), and a base (15.33) connecting the arms,
wherein the holder encompasses the coil device such that the first arm is arranged on a first side of the coil device (14.11) with respect to a coil cross-section, and wherein the second arm is arranged on a second side of the coil device (14.12),
wherein the first pair of magnets is arranged on an inner side of the first arm (15.311).

3. The Coriolis measurement sensor as claimed in claim 2,
wherein a second pair of magnets (15.2) is arranged on an inner side of the second arm (15.321) and faces the first pair of magnets,
wherein facing magnets respectively cause a rectified magnetic field.

4. The Coriolis measurement sensor as claimed in one of the preceding claims,
wherein the at least one coil has a central region (14.21) and a winding region (14.22) comprising the central region,
wherein, in an idle state of the at least one measurement tube, a boundary between the magnets of a pair, as projected onto the cross-sectional plane, is located at least sectionally in the central region.

5. The Coriolis measurement sensor as claimed in one of the preceding claims,
wherein the magnets respectively have a contact surface (16), by means of which contact surface they are contacted with the holder,
wherein the contact surface of at least one magnet of a respective pair has a first geometric structure (16.1), and wherein the holder has, in the region of the respective contact surface, a second geometric structure (16.2) which is at least sectionally inverse to the particular first geometric structure,
wherein the first geometric structure is in particular uneven.

6. The Coriolis measurement sensor as claimed in claim 5,
wherein the first geometric structure has a concave (16.11) or convex (16.12) curvature, at least sectionally,
and/or wherein the first geometric structure has at least one projection (16.13) and/or at least one recess (16.14), wherein the projection and/or the recess has a round or rectangular or polygonal cross-section.

7. The Coriolis measurement sensor as claimed in one of the preceding claims,
wherein the magnets are fastened at least sectionally to the holder in the region of their respective contact surfaces (16),
wherein the attachment is based on at least one of the following techniques:
soldering, sintering, welding, gluing, spot welding, shrinking, impressing.

8. The Coriolis measurement sensor as claimed in claim 7,
wherein the magnet is glued and the adhesive is in particular a ceramic adhesive.

9. The Coriolis measurement sensor as claimed in one of the preceding claims,
wherein the coil of an exciter is designed to charge the associated magnet device with a force, and
wherein the magnet device of a sensor is designed to induce an electrical voltage in the coil of the associated coil device.

10. The Coriolis measurement sensor as claimed in one of the preceding claims,
wherein the measuring sensor has two collectors (22), wherein a first collector (22.1) on an upstream side of the measuring sensor is designed to receive a medium flowing from a pipeline into the measuring sensor and guide it to the inlet of the at least one measurement tube,
wherein a second collector (22.2) is designed to receive the medium exiting the outlet of the at least one measurement tube and guide it into the pipeline.

11. The Coriolis measurement sensor as claimed in one of the preceding claims,
wherein the measuring sensor has two process connections (23), in particular flanges (23.1), which are designed to connect the measuring sensor to a pipeline.

12. The Coriolis measurement sensor as claimed in one of the preceding claims,
wherein the magnet device is mechanically connected to the associated measurement tube (11), and
wherein the coil device is fixed translationally and rotationally with respect to the inlet or outlet.

13. The Coriolis measurement sensor as claimed in one of the preceding claims,
wherein the measuring sensor (10) has a measurement tube (11),
wherein the holder/coil device of the sensor or exciter is respectively fastened to the measurement tube,
and wherein the coil device/holder of the sensor or exciter is respectively fastened to the supporting element,
or wherein the measuring sensor (10) has a measurement tube pair, wherein the holder/coil device of the sensor or exciter is respectively fastened to a first measurement tube (11.31) of the measurement tube pair, and the coil device/holder is respectively fastened to a second measurement tube (11.32) of the measurement tube pair.

14. The Coriolis measurement sensor as claimed in claim 13,
wherein the measuring sensor has two measurement tube pairs.

15. A Coriolis measuring instrument (1), comprising:
a Coriolis measuring sensor (10) as claimed in one of the preceding claims;
an electronic measuring/operating circuit (77), wherein the electronic measuring/operating circuit is designed to electrically charge the coils and optionally the associated temperature measuring instrument, wherein the charging of the coil and the temperature measuring instrument is effected by means of separate electrical connections (24) or by means of multiplexing,
wherein the at least one electrical connection (24) of a sensor or exciter is guided to the electronic measuring/operating circuit by means of a cable guide (25),
wherein the electronic measuring/operating circuit is further designed to determine and provide mass flow rate readings and/or density readings,
wherein the measuring instrument has in particular an electronics housing (80) for housing the electronic measuring/operating circuit.

## Revendications

1. Capteur Coriolis (10) d'un débitmètre Coriolis (1) destiné à mesurer un débit massique ou une densité d'un produit s'écoulant à travers au moins un tube de mesure du débitmètre Coriolis, lequel capteur comprend :
l'au moins un tube de mesure (11) avec une entrée (11.1) et une sortie (11.2), lequel tube est conçu pour guider le produit entre l'entrée et la sortie ;
au moins un excitateur (12), lequel est conçu pour faire vibrer l'au moins un tube de mesure ;
au moins deux capteurs (13), lesquels sont conçus pour mesurer les vibrations de l'au moins un tube de mesure ;
au moins un excitateur et/ou au moins un capteur présentant respectivement un dispositif de bobine (14) avec respectivement au moins une bobine (14.2), ainsi que respectivement un dispositif magnétique (15), le dispositif magnétique et le dispositif de bobine étant mobiles l'un par rapport à l'autre parallèlement à un plan de section transversale de la bobine,
le capteur comprenant un corps de support (20), lequel est conçu pour maintenir l'au moins un tube de mesure,
le dispositif magnétique (15) comprenant un support ferromagnétique magnétiquement conducteur (15.3) pour des aimants et au moins une première paire d'aimants (15.1),
les aimants étant respectivement conçus pour provoquer un champ magnétique perpendiculaire au plan de section de la bobine,
**caractérisé en ce que**
les aimants sont disposés sur un premier côté du dispositif de bobine (14.11) le long de la direction de mouvement, l'un derrière l'autre sur le support,
le champ magnétique d'un premier aimant (15.11) de la première paire étant orienté à l'opposé du champ magnétique d'un deuxième aimant (15.12) de la paire.

2. Capteur Coriolis selon la revendication 1,
pour lequel le support (15.3) présente une forme en U avec un premier bras (15.31) et un deuxième bras (15.32) et une base (15.33) reliant les bras,
pour lequel le support entoure le dispositif de bobine, de sorte que le premier bras est disposé sur un premier côté du dispositif de bobine (14.11) par rapport à une section transversale de la bobine, et
pour lequel le deuxième bras est disposé sur un deuxième côté du dispositif de bobine (14.12),
la première paire d'aimants étant disposée sur un côté intérieur du premier bras (15.311).

3. Capteur Coriolis selon la revendication 2,
pour lequel une deuxième paire d'aimants (15.2) est disposée sur un côté intérieur du deuxième bras (15.321) et est située à l'opposé de la première paire d'aimants,
pour lequel les aimants opposés provoquent chacun un champ magnétique de même direction.

4. Capteur Coriolis selon l'une des revendications précédentes,
pour lequel l'au moins une bobine présente une zone centrale (14.21) et une zone d'enroulement (14.22) entourant la zone centrale,
pour lequel, dans un état de repos de l'au moins un tube de mesure, une limite entre les aimants d'une paire, projetée sur le plan de la section transversale, se trouve au moins partiellement dans la zone centrale.

5. Capteur Coriolis selon l'une des revendications précédentes,
pour lequel les aimants présentent chacun une surface de contact (16), surface au moyen de laquelle ils sont en contact avec le support,
la surface de contact d'au moins un aimant d'une paire respective présentant une première structure géométrique (16.1), et le support présentant dans la zone de la surface de contact respective une deuxième structure géométrique (16.2) qui est, au moins par sections, inversée par rapport à la première structure géométrique respective,
la première structure géométrique étant notamment inégale.

6. Capteur Coriolis selon la revendication 5,
pour lequel la première structure géométrique présente au moins partiellement une courbure concave (16.1 1) ou convexe (16.12),
et/ou la première structure géométrique présente au moins une saillie (16.13) et/ou au moins un renfoncement (16.14), la saillie et/ou le renfoncement présentant une section transversale ronde ou rectangulaire ou polygonale.

7. Capteur Coriolis selon l'une des revendications précédentes,
pour lequel les aimants sont fixés au moins partiellement au support dans la zone de leurs surfaces de contact respectives (16),
la fixation étant basée sur au moins l'une des techniques suivantes : brasage, frittage, soudage, collage, pointage, rétraction, emmanchement.

8. Capteur Coriolis selon la revendication 7,
pour lequel l'aimant est collé et la colle est notamment une colle céramique.

9. Capteur Coriolis selon l'une des revendications précédentes,
pour lequel la bobine d'un excitateur est conçue pour appliquer une force au dispositif magnétique associé, et
pour lequel le dispositif magnétique d'un capteur est conçu pour induire une tension électrique dans la bobine du dispositif de bobine associé.

10. Capteur Coriolis selon l'une des revendications précédentes,
pour lequel le capteur comprend deux collecteurs (22), un premier collecteur (22.1) sur un côté amont du capteur étant conçu pour recevoir un produit s'écoulant dans le capteur à partir d'une conduite, et pour le guider vers l'entrée de l'au moins un tube de mesure,
un deuxième collecteur (22.2) étant conçu pour recevoir le produit sortant de la sortie de l'au moins un tube de mesure et pour le guider dans la conduite.

11. Capteur Coriolis selon l'une des revendications précédentes,
lequel capteur présente deux raccords process (23), notamment des brides (23.1), lesquels raccords sont conçus pour relier le capteur à une conduite.

12. Capteur Coriolis selon l'une des revendications précédentes,
pour lequel le dispositif magnétique est relié mécaniquement au tube de mesure (11) correspondant, et
pour lequel le dispositif de bobine est fixé en translation et en rotation par rapport à l'entrée et à la sortie.

13. Capteur Coriolis selon l'une des revendications précédentes,
lequel capteur comprend un tube de mesure (11),
le support / le dispositif de bobine du capteur ou de l'excitateur étant respectivement fixé au tube de mesure,
et le dispositif de bobine / le support du capteur ou de l'excitateur étant respectivement fixé au corps de support,
ou le capteur (10) présentant une paire de tubes de mesure, le support / le dispositif de bobine du capteur ou de l'excitateur étant fixé respectivement à un premier tube de mesure (11.31) de la paire de tubes de mesure, et le dispositif de bobine / le support étant fixé respectivement à un deuxième tube de mesure (11.32) de la paire de tubes de mesure.

14. Capteur Coriolis selon la revendication 13,
pour lequel le capteur comprend deux paires de tubes de mesure.

15. Débitmètre Coriolis comprenant :
un capteur Coriolis (10) selon l'une des revendications précédentes
un circuit électronique de mesure/d'exploitation (77), le circuit électronique de mesure/d'exploitation étant conçu pour alimenter électriquement les bobines et le dispositif de mesure de température éventuellement associé, l'alimentation de la bobine ainsi que du dispositif de mesure de température étant réalisée au moyen de liaisons électriques séparées (24) ou au moyen d'un multiplexage,
l'au moins une liaison électrique (24) d'un capteur ou d'un excitateur étant acheminée vers le circuit électronique de mesure/d'exploitation au moyen d'un guide-câble (25),
le circuit électronique de mesure/d'exploitation étant en outre conçu pour déterminer et mettre à disposition des valeurs mesurées de débit et/ou de densité,
l'appareil de mesure comprenant notamment un boîtier électronique (80) pour loger le circuit électronique de mesure/d'exploitation.
